Europäisches Patentamt

European Patent Office

Office européen des brevets

(19)

(11) **EP 0 618 441 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(51) Int Cl.⁷: $G01N\ 21/55$

(21) Anmeldenummer: **94103748.3**

(22) Anmeldetag: **11.03.1994**

(54) **Vorrichtung zur lateral aufgelösten Untersuchung einer lateral heterogenen ultradünnen Objektschicht**

Device for laterally resolved investigation of a laterally heterogeneous ultra-thin layer

Dispositif pour examiner par résolution latérale une couche ultra-mince à hétérogénéité latérale

(84) Benannte Vertragsstaaten:
**AT BE CH DE DK ES FR GB IE IT LI NL SE**

(30) Priorität: **27.03.1993 DE 4310025**

(43) Veröffentlichungstag der Anmeldung:
**05.10.1994 Patentblatt 1994/40**

(73) Patentinhaber: **Roche Diagnostics GmbH**
**68298 Mannheim (DE)**

(72) Erfinder: **Knoll, Wolfgang**
**D-55124 Mainz (DE)**

(74) Vertreter: **Pfeifer, Hans-Peter, Dr.**
**Patentanwälte**
**Dr. H.-P. Pfeifer Dr. P. Jany**
**Beiertheimer Allee 19**
**76137 Karlsruhe (DE)**

(56) Entgegenhaltungen:
**EP-A- 0 455 067     EP-A- 0 469 377**
**DE-C- 3 720 387**

- **SENSORS AND ACTUATORS, Bd. 15, Nr. 3, November 1988, LAUSANNE, CH, Seiten 285-295, XP000049690 NELLEN P M ET AL: "INTEGRATED OPTICAL INPUT GRATING COUPLERS AS BIOCHEMICAL SENSORS"**
- **JOURNAL OF APPLIED PHYSICS, Bd. 67, Nr. 8, 15.April 1990, NEW YORK US, Seiten 3572-3575, XP002032127 W. HICKEL ET AL.:**
- **MRS BULLETIN, Bd. 16, Juli 1991, Seiten 29-39, XP002032128 W. KNOLL:**

**Beschreibung**

Die Erfindung betrifft eine Vorrichtung zur lateral aufgelösten (differenzierten) Untersuchung einer lateral heterogenen ultradünnen Objektschicht, insbesondere einer in unterschiedlichen Teilbereichen unterschiedlichen Änderung der Schichtdicke der Objektschicht, die aus einer spezifischen Bindungsreaktion eines an der Objektschicht fixierten ersten Bindungspartners mit einem nichtgebundenen zweiten Bindungspartner resultiert.

Für zahlreiche Anwendungsfälle ist es erforderlich, ultradünne Schichten lateral aufgelöst darzustellen. Es geht dabei darum, lateral heterogene Strukturen einer Schicht, deren Schichtstärke vielfach in der Größenordnung von einem Nanometer ($10^{-6}$ mm) liegt, so darzustellen, daß kleinste laterale Unterschiede, insbesondere Variationen der Schichtdicke, die in manchen Fällen nur Bruchteile eines Nanometers ausmachen, erkennbar sind.

Dies wird nachfolgend auch als "Mikroskopie ultradünner Schichten" bezeichnet.

Dies ist mit normalen propagierenden elektromagnetischen Wellen nicht möglich. Nicht nur mit sichtbarem Licht, sondern auch mit elektromagnetischen Wellen kürzerer Wellenlängen, wie sie in der Elektronenmikroskopie eingesetzt werden, läßt sich kein Kontrast zwischen Teilbereichen der Objektschicht mit unterschiedlicher Dicke erreichen, der eine lateral differenzierte Untersuchung solcher Schichten ermöglicht.

Für derartige Untersuchungen, bei denen die Schicht vielfach nur aus einer oder einigen wenigen Moleküllagen besteht, wurden Methoden entwickelt, bei denen die "Beleuchtung" der Probe auf evaneszenten Wellen basiert. Das wohl bekanntestes Beispiel evaneszenter Wellen entsteht bei der Totalreflektion eines Lichtstrahls, der in einem Medium mit höherem Brechungsindex (zum Beispiel Glas) unter einem Winkel, der kleiner ist als der kritische Winkel gegen eine Grenzfläche zu einem Medium mit kleinerem Brechungsindex (zum Beispiel Luft) gerichtet wird. Die genauere Untersuchung dieses Phänomens zeigt, daß das elektrische Feld in dem Medium mit geringerem Brechungsindex (also beispielsweise der Luft) nicht abrupt auf Null abfällt, sondern daß stattdessen eine sich parallel zu der Grenzfläche ausbreitende harmonische Welle zu beobachten ist, deren Amplitude senkrecht zu der Grenzfläche exponentiell abfällt.

Um dieses Phänomen zur lateral aufgelösten Untersuchung heterogener Objektschichten zu verwenden, sind im wesentlichen folgende Elemente erforderlich.

Auf einem Tragteil (Substrat) mit einer ebenen Oberfläche befindet sich eine Schichtstruktur, die neben der Objektschicht mindestens eine zweite Schicht umfaßt, welche so ausgebildet ist, daß eine gebundene nichtstrahlende elektromagnetische Welle erzeugt werden kann. Die zweite Schicht wird deshalb nachfolgend auch als wellenbildende Schicht bezeichnet. Hierfür sind vor allem folgende zwei Strukturen bekannt.

Zum einen kann die zweite Schicht eine dünne planare Wellenleiterschicht sein. Hierfür eignet sich eine dünne Schicht aus einem optisch transparenten Material mit hohem Brechungsindex. Der Brechungsindex muß höher sein als der der beidseitig angrenzenden Nachbarschichten. Einzelheiten hierüber sind beispielsweise der europäischen Patentschrift 0 226 604 zu entnehmen, in der es allerdings ausschließlich um eine Untersuchungsmethode geht, bei der keine lateralen Unterschiede erfaßt werden können. Auf die diesbezüglichen Unterschiede im Vergleich mit der vorliegenden Erfindung wird im folgenden noch näher eingegangen.

Bei dem zweiten bekannten Verfahren zur Erzeugung evaneszenter Wellen in der Objektschicht besteht die dieser benachbarte zweite Schicht aus Metall, in der ein Oberflächenplasmon (PSP = plasmon surface polariton) angeregt wird. Die lateral differenzierte Untersuchung von Objektschichten mit Hilfe der Oberflächenplasmonenmikroskopie (SPM) wird unter anderem in folgenden Publikationen beschrieben.

-    DE-A-37 20 387

-    B. Rothenhäusler, W. Knoll:

     "Surface-plasmon microscopy", Nature, Vol. 332, No. 6165, pp. 615-617 (1988)

-    W. Hickel, B. Rothenhäusler, W. Knoll:

     "Surface plasmon microscopic characterization of external surfaces", J. Appl. Phys. 66 (1989), pp. 4832-4836

-    W. Hickel, W. Knoll: "Surface plasmon optical characterization of lipid monolayers at 5µm lateral resolution", J. Appl. Phys. 67 (1990), 3572ff.

-    EP-A-0 469 377

Um in der zweiten Schicht eine gebundene, nichtstrahlende elektromagnetische Welle zu erzeugen, deren "evaneszente Ausläufer (evanescent tails)" sich in die Objektschicht erstrecken, ist eine Koppleranordnung erforderlich, durch die ein Anregungslichtstrahl eingekoppelt wird. Hierzu wurden Prismenanordnungen und optische Gitter beschrieben, wobei in der Praxis zur Mikroskopie ultradünner Schichten bisher Prismen eingesetzt wurden. Sowohl im Falle der Oberflächenplasmonen als auch im Falle des Wellenleiters wird die gebundene nichtstrahlende elektromagnetische Welle (das Plasmon bzw. die Wellenleitermode) nur erzeugt, wenn das Anregungslicht unter einem (oder einem von mehreren möglichen) definierten Einfallswinkel einfällt, der nachfolgend als "Anregungswinkel" bezeichnet wird. Während ein unter einem Anregungswinkel einfallender Lichtstrahl eine gebundene Welle anregt und deshalb weitgehend absorbiert wird, werden unter anderen Winkeln einfallende Lichtstrahlen reflektiert. Das reflektierte Licht durchläuft also ein scharfes Minimum, wenn der Einfallswinkel des Anregungslichtes variiert wird und dabei einen Winkel durchläuft, bei dem eine gebundene nichtstrahlende elektromagnetische Welle erzeugt wird.

Der Anregungswinkel ist (bei im übrigen unveränderter Meßanordnung) von der Objektschicht abhängig. Ist die Dicke und/oder Zusammensetzung der Objektschicht in unterschiedlichen Teilbereichen verschieden, so resultiert hieraus eine lokale Variation der Dispersionsrelation (also des Zusammenhangs zwischen Impuls und Energie) der gebundenen Welle in der zweiten Schicht. Infolgedessen ist die Absorption des Anregungslichtes an zwei verschiedenen Stellen der Objektschicht unterschiedlich.

Um diesen Unterschied als Kontrast sichtbar zu machen, ist ein optisches Abbildungssystem erforderlich, durch das der Untersuchungsbereich in eine Bildebene abgebildet wird. Mathematisch ausgedrückt bewirkt das Abbildungssystem eine Fourier-Rücktransformation aus dem Impulsraum in den Ortsraum. Die Ausrichtung des optischen Abbildungssystems entspricht dabei üblicherweise dem Einfallswinkel, weil das von dem zu untersuchenden Bereich der Objektschicht spiegelnd reflektierte Licht erfaßt werden soll.

Nähere Einzelheiten über vorbekannte Verfahren zur lateral aufgelösten Untersuchung einer lateral heterogenen ultradünnen Objektschicht sind den diesbezüglichen Publikationen zu entnehmen. Insbesondere sei verwiesen auf "Optical Characterization of Organic Thin Films and Interfaces with Evanescent Waves", publiziert in MRS Bulletin, 16, 29-39 (1991).

Wie einleitend bemerkt richtet sich die Erfindung insbesondere auf Anwendungsfälle, bei denen Änderungen der Schichtdicke der Objektschicht beobachtet und/oder quantitativ vermessen werden sollen, die aus einer spezifischen Bindungsreaktion zweier bioaffiner Bindungspartner resultieren. Solche Bindungsreaktionen sind vor allem bei analytischen Untersuchungen von Proben (insbesondere im medizinischen Bereich, wie beispielsweise Blut und Urin) von Bedeutung.

Analyseverfahren, die auf der spezifischen Bindungsreaktion zweier bioaffiner Bindungspartner beruhen, haben zunehmend an Bedeutung gewonnen. Spezifische Bindungsreaktionen in diesem Sinne sind insbesondere immunologische Interaktionen, also Wechselwirkungen zwischen Antigenen bzw. Haptenen einerseits und Antikörpern andererseits. Es können jedoch auch andere spezifische bioaffine Wechselwirkungen analytisch verwendet werden, wie die Lektin-Zukker-Wechselwirkung, eine Wirkstoff-Rezeptor-Wechselwirkung und die spezifische Bindung zwischen Biotin und Streptavidin. Im folgenden wird einfachheitshalber, jedoch ohne Beschränkung der Allgemeinheit, auf immunologische Bindungsreaktionen Bezug genommen.

Bei immunologischen Analyseverfahren werden vielfach sogenannte Festphasen-Bindungsreaktionen verwendet, bei denen ein an einer festen Oberfläche fixierter erster Bindungspartner mit einem zweiten Bindungspartner spezifisch bindet, der in einer in Kontakt mit der Oberfläche stehenden Flüssigkeit frei beweglich ist. Es gibt dabei zahlreiche unterschiedliche Reaktionsführungen, die alle zu dem Ergebnis führen, daß nach Beendigung der Analysereaktion die Konzentration des zweiten Bindungspartners, der mit dem ersten Bindungspartner gebunden hat und deswegen selbst an der Oberfläche fixiert ist, ein Maß für die gesuchte Konzentration des Analyten in der Probenflüssigkeit ist.

Der Nachweis der Bindung des freien Bindungspartners an den festphasenfixierten Bindungspartner wird üblicherweise dadurch ermöglicht, daß der freie Bindungspartner (oder ein weiterer hieran gebundener Bindungspartner) mit einem Markierungsbestandteil ("Label") markiert ist. Gebräuchlich ist insbesondere die Markierung mit einem Enzym oder mit einem fluoreszierenden Molekül. Die dadurch ermöglichte indirekte Beobachtung der Bindung erlaubt Analysen mit hoher Spezifität und Empfindlichkeit, hat jedoch erhebliche Nachteile. Insbesondere ist es vielfach schwierig, eine geeignete Verbindung zwischen einem Bindungspartner und einem Label ("Konjugat") herzustellen. Der Nachweis einer Fluoreszenzmarkierung verursacht einen erheblichen apparativen Aufwand. Der Nachweis eines Enzyms erfordert einen speziellen Reaktionsschritt, durch den die Analysedauer verlängert und der Reaktionsablauf komplizierter wird.

Diese Probleme werden vermieden, wenn es gelingt, die aus der Bindungsreaktion resultierende Änderung der Schichtdicke unmittelbar zu beobachten oder (für eine quantitative Analyse) sogar quantitativ zu vermessen. Solche Verfahren werden in einer Anordnung, die ohne laterale Auflösung arbeitet, in der bereits erwähnten europäischen Patentschrift 0 226 604 beschrieben.

Ein Analysesystem, das auf der lateral differenzierten Untersuchung der aus einer spezifischen Bindungsreaktion resultierenden Schichtdickenänderung einer Objektschicht basiert, ist Gegenstand der europäischen Patentanmeldung 0 469 377, auf die hier vollinhaltlich Bezug genommen wird.

Mit Hilfe evaneszenter Wellen ist es möglich, ultradünne Schichten mit außerordentlich hoher Empfindlichkeit zu untersuchen. Beispielsweise wird in der erwähnten europäischen Patentschrift eine unregelmäßige Struktur von Teilbereichen unterschiedlicher Bindungsaktivität eine Objektschicht mit einer lateralen Auflösung von etwa 5 µm quantitativ bestimmt. Der mit der Bindungsreaktion verbundene Zuwachs der Schichtdicke beträgt in einem Anwendungsbeispiel in den weniger bindeaktiven Teilbereichen 1,8 nm und in den stärker bindeaktiven Teilbereichen der Objektschicht 3,4 nm. Diese kleinen Änderungen der Schichtdicke werden mit einer so guten Genauigkeit ausgewertet, daß die Konzentration des an die Festphase gebundenen Bindungspartners mit einer für eine quantitative Analyse ausreichenden Genauigkeit bestimmt werden kann.

Für die praktische Anwendung dieser Technik ist von großer Wichtigkeit, daß der apparative Aufwand sich in vertretbaren Grenzen hält. Ziel der vorliegenden Erfindung ist es daher, einen Beitrag zur Vereinfachung der lateral aufgelösten Untersuchung ultradünner Objektschichten zu leisten und die Möglichkeiten zur Durchführung solcher Verfahren zu verbessern.

Diese Aufgabe wird durch eine Vorrichtung gemäß Anspruch 1 gelöst.

Die Drehung des Gitters ermöglicht es, den Kontrast der Abbildung der Objektschicht in einfacher Weise einzustellen, um je nach den jeweiligen Verhältnissen (vor allem je nach der Schichtdicke der Objektschicht bei gegebener Wellenlänge des Anregungslichtes und gegebenem Meßaufbau) optimale Kontrastwerte zu erreichen. Dies ist erforderlich, um eine gute optische Darstellung und eine möglichst hohe Genauigkeit der quantitativen Bestimmung der Schichtdicke in unterschiedlichen Teilbereichen einer lateral heterogenen Objektschicht zu ermöglichen.

Bei den bisher bekannten Verfahren zur Mikroskopie ultradünner Schichten erfolgte die Einstellung des Kontrastes durch Variation des Einfallswinkel $\phi$ (phi) zwischen dem Anregungslichtstrahl und dem Lot auf die Ebene der Objektschicht. Bei der Erfindung wird (möglicherweise zusätzlich zu der $\phi$-Variation, vorzugsweise aber ausschließlich) der Azimutwinkel $\theta$ (theta) zwischen den Gitterlinien und der Einfallsebene des Anregungslichtes variiert. Dies wird nachfolgend auch als "Mikroskopie im $\theta$-Kontrast" bezeichnet.

Die bekannte Mikroskopie im $\phi$-Kontrast erfordert eine aufwendige Bewegungsmechanik, weil jeweils gleichzeitig der Winkel zwischen dem Anregungslichtstrahl und der Objektfläche um $\phi$ und (zur Einhaltung der Spiegelbedingung) der Winkel zwischen dem Anregungslichtstrahl und der optischen Achse des Abbildungssystems um $2\phi$ variiert werden muß. Demzufolge ist eine synchrone Bewegung des Substrats mit der wellenbindenden Struktur und des Abbildungssystem (oder des Substrats und der Anregungslichtquelle) erforderlich. Diese komplizierte Konstruktion wird bei der Erfindung durch eine einfache Drehung des Substrats mit dem Gitter ersetzt.

Darüber hinaus wird der Einstellbereich des Kontrastes durch die $\theta$-Drehung erweitert. Dadurch werden die Möglichkeiten zur Optimierung des Kontrastes der optischen Abbildung wesentlich verbessert. Dies ist im Zusammenhang mit spezifischen Bindungsreaktionen beispielsweise von besonderer Bedeutung, wenn eine mehrstufige Bindungsreaktion mit Hilfe der Mikroskopie ultradünner Schichten untersucht werden soll.

Gemäß einer bevorzugten Ausführungsform ist zum Auskoppeln des Detektionslichtes ein Auskopplungsgitter vorgesehen, das in dem Untersuchungsbereich parallel zu der Objektschicht verläuft, und der Betrag des Gittervektors des Auskopplungsgitters mit dem Betrag des Wellenvektors der gebundenen nichtstrahlenden elektromagnetischen Welle im wesentlichen übereinstimmt, so daß das Detektionslicht im wesentlichen senkrecht zu der Gitterebene ausgekoppelt wird.

Durch diese Maßnahmen wird die Möglichkeit eröffnet, den Untersuchungsbereich der Objektschicht wie bei der normalen Lichtmikroskopie in vertikaler Aufsicht auf die Fläche zu beobachten. Dadurch wird die Meßtechnik vereinfacht und zugleich werden die Bedingungen der optischen Abbildung des Untersuchungsbereiches verbessert. Vor allem ist eine sehr große Annäherung des zur Abbildung verwendeten Objektives an die Oberfläche der Objektschicht möglich, wodurch die maximal mögliche numerische Apparatur wesentlich verbessert wird. Hieraus resultiert eine verbesserte räumliche Auflösung.

Die Erfindung wird im folgenden anhand von in den Figuren schematisch dargestellten Ausführungsbeispielen näher erläutert. Es zeigen:

Figur 1    eine Seitenansicht eines Labormusters einer erfindungsgemäßen Vorrichtung;

Figur 2    eine perspektivische Schemadarstellung der geometrischen Verhältnisse;

Figur 3    eine Prinzipdarstellung einer ersten Ausführungsform der Erfindung, bei der Oberflächenplasmonen angeregt werden;

Figur 4    photographische Darstellungen von mit der Ausführungsform gemäß Figur 3 gewonnenen Abbildungen einer ultradünnen Objektschicht;

Figur 5    eine Prinzipdarstellung einer zweiten Ausführungsform der Erfindung, bei der Wellenleitermoden angeregt werden;

Figur 6    eine Prinzipdarstellung einer dritten Ausführungsform der Erfindung mit einer multidiffraktiven Gitterstruktur;

Figur 7    eine Aufsicht auf eine multidiffraktive Gitterstruktur;

Figur 8    eine Schema zur Erläuterung der Funktion einer multidiffraktiven Gitterstruktur gemäß Figur 7;

Figur 9    eine Schema zur Erläuterung des zweiten Hauptaspektes des Erfindung;

Figur 10   eine Ausführungsform der Erfindung, bei der deren zweiter Hauptaspekt in Verbindung mit einem Prisma als Koppleranordnung zum Einkoppeln des Anregungslichtes realisiert ist.

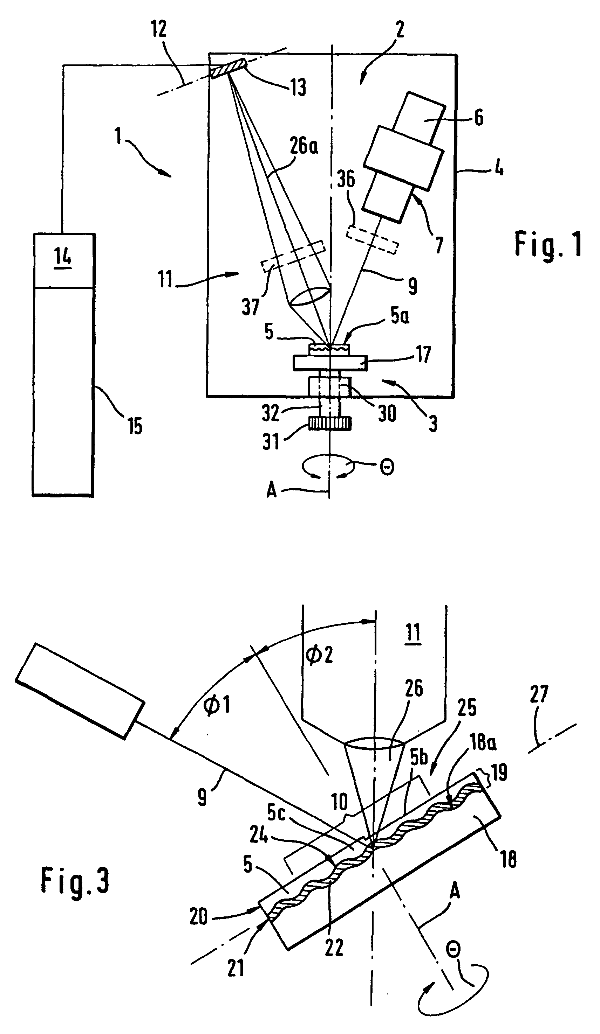

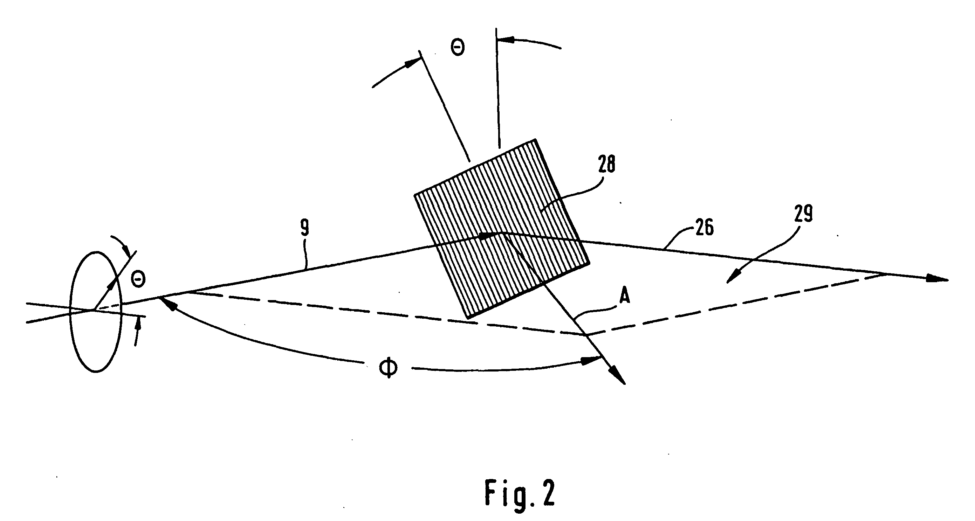

Bei der in den Figuren 1 bis 3 dargestellten Vorrichtung 1 zur Mikroskopie ultradünner Schichten sind die Teile der insgesamt mit 2 bezeichneten optischen Anordnung und ein Probenhalter 3 an einer stabilen vertikalen Platte 4 befestigt. Die optische Anordnung 2 schließt auf der Anregungsseite einen auf die Oberfläche 5a einer Objektschicht 5 (Figur 2) gerichteten Laser 6 ein. In einem konkreten Ausführungsbeispiel wurde ein Helium-Neon-Laser 6 mit einer Wellenlänge von 632,8 nm und einer Leistung von 5 mW verwendet. Alternativ wurde auch eine Laserdiode mit einer Wellenlänge von 670 nm und einer Leistung von 4 mW erfolgreich eingesetzt. Der Laser 6 bildet eine Anregungslichtquelle 7 zur Erzeugung einer gebundenen nichtstrahlenden elektromagnetischen Welle in der Objektschicht 5. Der von der Anregungslichtquelle 7 ausgehende Strahl des Anregungslichtes 9 ist mit üblichen (nicht dargestellten) Mittel soweit aufgeweitet, daß er den Untersuchungsbereich 10 der Objektschicht 5 gleichmäßig beleuchtet.

Die Abbildungsseite der optischen Anordnung 2 besteht im wesentlichen aus einem optischen Abbildungssystem 11 und einem in dessen Bildebene 12 angeordneten Feld 13 (Array) lichtempfindlicher Elemente.

Das optische Abbildungssystem ist in der Figur vereinfacht als Linse dargestellt. Vorzugsweise wird eine korrigierte Mikroskopoptik verwendet, wie sie in kommerziellen Auflicht-Mikroskopen eingesetzt wird. Ein "long distance"-Objektiv, wie beispielsweise die "Epilan LD"-Typen von Zeiss ist besonders bevorzugt.

Das Feld 13 lichtempfindlicher Elemente besteht beispielsweise aus CCD's, wie sie für TV-Kameras verwendet werden. Es ist mit einer Bildanalyseeinrichtung 14 verbunden, welche Bestandteil der insgesamt mit 15 bezeichneten Meßelektronik des Gerätes ist. Eine etwas eingehendere Erläuterung der Bildanalyse und Auswertung kann der EP 0 469 377 entnommen werden. Weitere Einzelheiten dieser Technik sind dem Fachmann bekannt und nicht Gegenstand der vorliegenden Erfindung.

Auf einem Probentisch 17 des Probenhalters 3 ist ein Substrat 18 befestigt, das als Träger für eine mindestens zweischichtige Schichtstruktur 19 dient. Die von dem Substrat 18 abgewandte erste Schicht 20 ist die Objektschicht 5. Als zweite Schicht 21 der Schichtstruktur 19 befindet sich eine Metallschicht 22 aus Silber zwischen der Objektschicht 5 und dem Substrat 18.

Die Oberfläche 18a des Substrats 18 ist mit einer Gitterstruktur 24 versehen, die in den Figuren (ebenso wie die Schichtdicke der Schichten) stark übertrieben und unmaßstäblich dargestellt ist. In einem praktischen Ausführungsbeispiel besteht die Oberfläche 18a des Substrats 18 aus einem Photoresist-Material, in welchem ein Gitter mit einer Periodenlänge L =0,5 $\mu$m holographisch erzeugt wurde (H. Knobloch et al., J.Chem. Phys. 91 (1989) 3810). Die Metallschicht 22 wurde durch Vakuumverdampfung auf der Photoresist-Oberfläche 18a des Substrates 18 erzeugt. Die Oberfläche 18a des Substrats 18 ist (abgesehen von der Gitterstruktur 24, die in Relation zu der Flächenausdehnung eine sehr geringe Amplitude von beispielsweise 15 nm hat) plan und eben.

Alternativ kann die Gitterstruktur auch durch reaktives Plasma-Ätzen ("ion-milling") oder mit Hilfe einer Prägetechnik ("embossing") in einem thermoplastischen Polymersubstrat, zum Beispiel aus PMMA ("Plexiglas") erzeugt werden. Für die Massenproduktion ist insbesondere das "injection molding"-Verfahren geeignet, welches für die Herstellung von CD's verwendet wird.

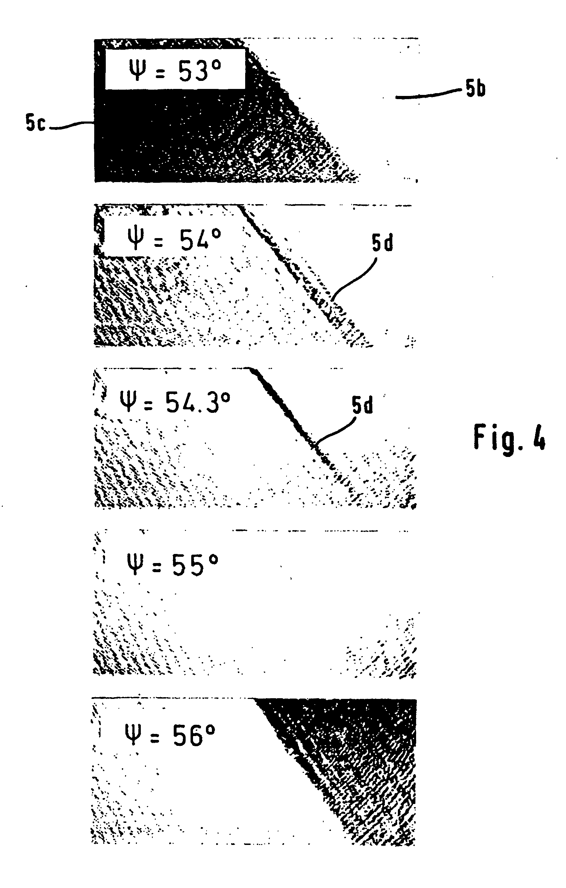

Die Gitterstruktur 24 dient bei dem in Figur 3 dargestellten Ausführungsbeispiels als Koppleranordnung 25 zum Einkoppeln des Anregungslichtes 9 und zugleich zum Auskoppeln des Detektionslichtes 26, wobei der Einfallswinkel $\phi$1 und der Auskopplungswinkel $\phi$2 gleich groß sind.

Soweit bisher beschrieben, stimmt die erfindungsgemäße Vorrichtung 1 zur Mikroskopie ultradünner Schichten im wesentlichen mit bekannten Vorrichtungen zur Oberflächenplasmonen-Mikroskopie überein. Ein bedeutsamer Unterschied besteht darin, daß der Probentisch 17 und somit das Substrat 18 und die darauf befindliche Gitterstruktur 24 um eine senkrecht zu der Gitterebene 27 der Gitterstruktur 24 verlaufende Achse A drehbar ist, um die Orientierung der Gitterlinien 28 relativ zu der Einfallsebene 29 des Anregungslichtes 9 durch Änderung des Azimutwinkels $\theta$ zwischen der Einfallsebene 29 und den Gitterlinien 28 zu variieren. Die Einfallsebene 29 ist wie üblich durch Zentralstrahl des Anregungslichtes 9 und die Normale A auf die Objektschicht 5 definiert. In Figur 1 und 3 stimmt sie mit der Zeichenebene überein. Während bei den bisher bekannten Vorrichtungen zur Mikroskopie ultradünner Schichten stets der Einfallswinkel $\phi$1 (und zugleich der Ausfallswinkel $\phi$2) variiert wurde, erfolgt die Einstellung des Kontrastes bei der Erfindung durch die konstruktiv wesentlich einfachere Einstellung des Winkels $\theta$. Bei dem in der Figur 1 dargestellten Labormuster ist die $\theta$-Einstellung beispielsweise einfach dadurch realisiert, daß der Probentisch 17 auf einer in einem Drehlager 30 mit Hilfe eines Handrades 31 einstellbaren Achse 32 um beliebige Winkel $\theta$ drehbar ist.

Als Objektschicht 5 für die Erprobung der Erfindung wurden mit Hilfe einer Langmuir-Blodgett-Kuhn (LBK)- Technik Monoschichten eines Polyglutamat-Polymers (poly[(gamma-methyl-L-glutamate)-co-(gamma-octadecyl-L-glutamatel) auf die Silberschicht beschichtet (W. Hickel et al.: Langmuir 6 (1990) 1403). Mit dieser Technik wurden Teilbereiche 5b und 5c der Objektschicht 5 mit unterschiedlicher Schichtstärke hergestellt, wie dies in Figur 3 schematisch angedeutet ist.

Figur 4 zeigt experimentelle Ergebnisse für einen Fall, bei dem sich die Dicken der Teilbereiche 5b und 5c um vier Monoschichten unterschieden. Dargestellt ist eine Serie photographischer Aufnahmen mit der anhand der Figuren 1 bis 3 beschriebenen experimentellen Anordnung, die bei einem festen Winkel $\phi$ = 35 Grad und bei dem in der Figur angegebenen Azimut-Rotationswinkel $\theta$ aufgenommen wurden. Dabei ent-

spricht der Winkel θ = 0 Grad einem zu der Einfallsebene 29 senkrechten Verlauf der Gitterlinien 28. Bei θ = 53 Grad befindet sich der dickere Teilbereich 5c (mit den vier Monoschichten) in Resonanz und erscheint daher in der Reflektion (φ1=φ2) dunkel. Bei Drehung des Gitters auf 54 Grad befindet sich der Teilbereich 5c nicht mehr in Resonanz, während ein zwischen 5b und 5c befindlicher Übergangsbereich 5d in Resonanz und daher dunkel ist. Bei weiterer Rotation auf 54,3 Grad erkennt man den Zustand optimaler Resonanz des Übergangsbereiches 5d (mit zwei zusätzlichen Monoschichten) im Vergleich zu den Nachbarbereichen 5b und 5c. Der Unterschied zwischen dem Übergangsbereich 5d und den Nachbarbereichen 5b und 5c beträgt jeweils etwa 3,5 nm, weil eine Doppelschicht des Polyglutamat-Polymers etwa diese Stärke hat. Ein solcher Schichtunterschied ist erfindungsgemäß also mit starkem Kontrast darstellbar.

Bei weiterer Vergrößerung des Winkels θ nähert sich der Teilbereich 5b der Silberschicht, auf dem sich keine zusätzlichen Polymerschichten befinden, der Resonanz, die etwa bei θ = 56 Grad (unterste Photographie) erreicht ist.

Der der Erfindung zugrundeliegende Effekt läßt sich dadurch erklären, daß die Drehung um den Azimutwinkel θ zu einer Verschiebung des Resonanzwinkels φ führt. Dies ist ein in der wissenschaftlichen Literatur seit langem bekannter Effekt. Verwiesen sei auf folgende Publikationen:

- Y.-Y. Teng et al.: Phys. Rev. Lett. <u>19</u>, 511 (1967)

- T. Inagaki et al.: Phys. Rev. B28 1740 (1983)

- G.B. Bryan-Brown et al.: Journal of Modern Optics, <u>37</u>, 1227 (1990).

Im Rahmen der Erfindung wurde festgestellt, daß die Drehung des Gitters bei der Mikroskopie ultradünner Schichten zu einer Einstellbarkeit des Kontrastes ohne Störung der Bilddarstellung führt.

Das Anregungslicht 9 ist oftmals linear polarisiert. Vorzugsweise werden Laser 6 eingesetzt, die polarisiertes Licht erzeugen. Es kann jedoch ein Polarisator 36 im Strahl des Anregungslichtes 9 vorgesehen sein, der in Figur 1 als Option gestrichelt eingezeichnet ist. Wenn (wie bisher üblich) die Einfallsebene 29 senkrecht zu den Gitterlinien 28 verläuft, können Plasmonen in der Metallschicht 22 nur mit p-polarisiertem Licht (das heißt mit einer Polarisationsrichtung in der Einfallsebene) angeregt werden.

Bei Drehung der Gitterstruktur 24 um einen Azimutwinkel θ ungleich Null lassen sich Plasmonen auch mit s-polarisiertem Licht anregen. Um eine von dem Azimutwinkel θ unabhängige Anregungsintensität zu erreichen, kann es dabei zweckmäßig sein, die Polarisationsebene des Anregungslichtes 9 synchron mit der Einstellung des Azimutwinkels θ der Gitterlinien 28 zu drehen, wie dies in Figur 2 angedeutet ist.

Gemäß einer weiteren bevorzugten Ausführungsform ist in dem Lichtweg 26a des Detektionslichtes 26 ein in Figur 1 ebenfalls als Option gestrichelt eingezeichneter Polarisator 37 angeordnet. Er kann einerseits dazu dienen, ungewünschte reflektierte Bestandteile (beispielsweise s-polarisierte Bestandteile bei Verwendung von unpolarisiertem Anregungslicht) zu eliminieren. Zum zweiten ermöglicht er eine hinsichtlich des Polarisationswinkels differenzierte Untersuchung von Objektschichten, die eine Anisotropie hinsichtlich ihres Polarisationsverhaltens zeigen. Im Rahmen der Erfindung ist eine plasmonenmikroskopische Detektion solcher Anisotropien möglich, wenn Azimut-Winkel θ ungleich Null eingestellt werden. Schließlich ist es dabei auch möglich, die s-polarisierten Anteile des Detektionslichtes selektiv zu erfassen und damit eine Kontrastumkehr zu erreichen.

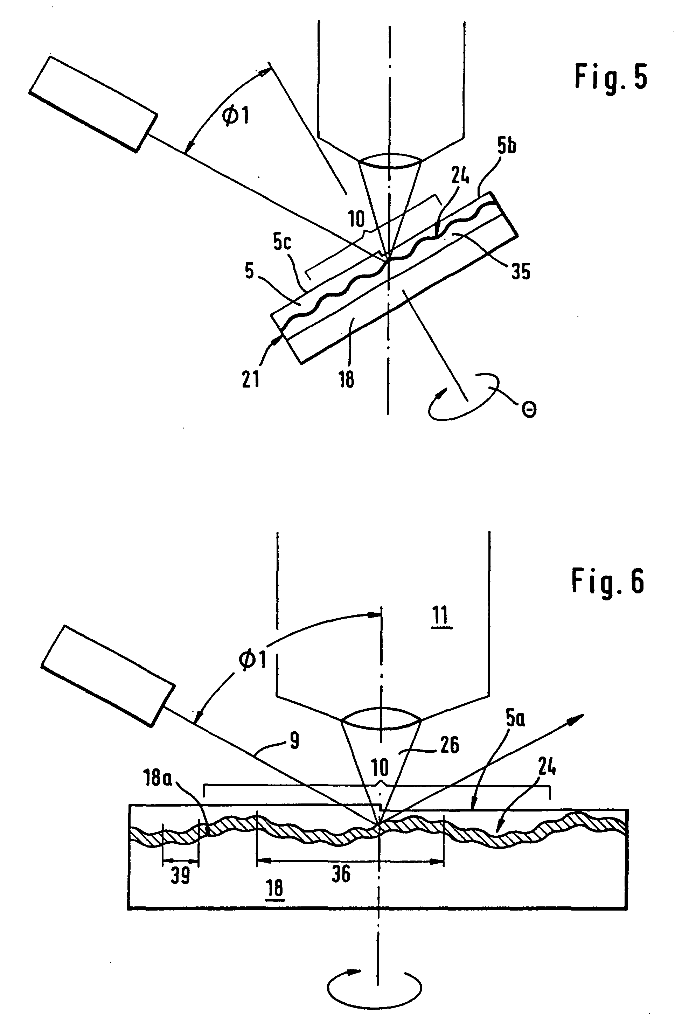

Die in Figur 5 dargestellte Ausführungsform unterscheidet sich von Figur 2 dadurch, daß sich statt der Metallschicht eine Wellenleiterschicht 35 als zweite Schicht 21 auf dem Substrat 18 erstreckt. Sie besteht aus einem optisch transparenten Material, dessen Brechungsindex höher ist als der der Nachbarschichten 5 und 18, so daß an den Grenzflächen Totalreflektion eintritt, wenn der Auftreffwinkel kleiner als der kritische Winkel ist. Wenn das Anregungslicht 9 unter einem Anregungswinkel φ1 auf die auch in diesem Fall zur Einkopplung dienende Gitterstruktur 24 auftrifft, wird in der Wellenleiterschicht 35 eine Lichtleitermode angeregt. Wie erwähnt, ist diese Technik und ihre Anwendung für analytische Zwecke im Prinzip bekannt, so daß sie hier nicht näher erläutert werden muß.

Im allgemeinen wurden Lichtleitermoden bisher im Rahmen der Analytik aber nur in räumlich integrierenden Meßverfahren ohne laterale Auflösung eingesetzt, so beispielsweise in der oben bereits erwähnten europäischen Patentschrift 0 226 604. Von diesen Verfahren unterscheidet sich die Ausführungsform der Figur 5 nicht nur durch die θ-Rotation, sondern auch grundlegend dadurch, daß eine lateral aufgelöste Untersuchung (also eine Mikroskopie) möglich ist. Hierzu ist wesentlich, daß das Licht in dem Untersuchungsbereich 10 nicht nur eingekoppelt, sondern auch ausgekoppelt wird. Durch den damit verbundenen Energieverlust wird die optische Weglänge der Lichtleitermode in der Schicht 35 wesentlich verkürzt. Typischerweise beträgt sie (definiert durch die Abschwächung der Amplitude um einen Faktor 1/e) weniger als 10 µm, im Vergleich zu einigen cm bei räumlich integrierenden Verfahren. Im Gegensatz dazu wurde bei dem bisher üblichen integrierenden Verfahren Wert darauf gelegt, daß die Lichtleitermode über eine größere Wegstrecke verläuft, auf der die zu untersuchende Objektschicht in Kontakt mit der Wellenleiterschicht steht. Die im Rahmen der Erfindung wesentlich kürzere optische Weglänge der Lichtleitermoden bedingt eine Reduzierung der Einwirkung der Objektschicht 5, also potentiell eine Verminderung der Empfindlichkeit. Überraschenderweise hat sich im Rahmen der Erfindung gezeigt, daß dennoch eine quantitativ auswertbare Erfassung der lateralen Unterschiede der Schichtdicke der Objektschicht 5 innerhalb des Untersuchungsbereiches 10 möglich ist, die eine analytische Auswertung erlaubt.

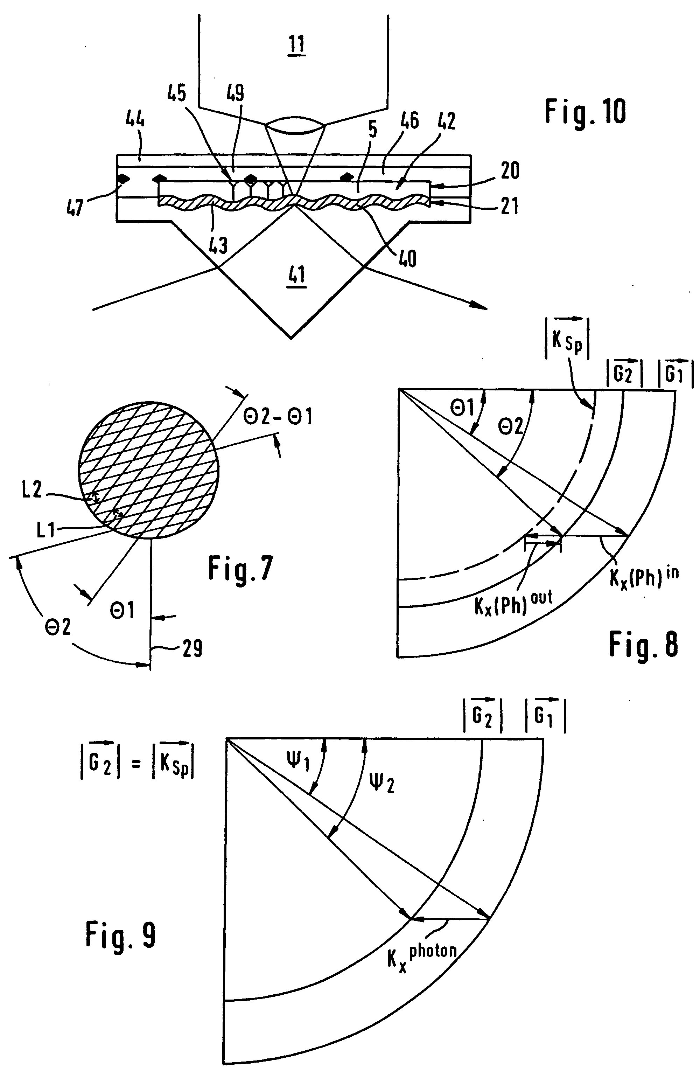

Figur 6 zeigt eine Ausführungsform, bei der die Gitterstruktur 24 multidiffraktiv ausgebildet ist. Im dargestellten Fall ist die Oberfläche 18a des Substrats 18 mit einer Doppel-Gitterstruktur versehen, die aus der Überlagerung eines ersten Gitters 36 mit einer Gitterkonstanten L1 und eines zweiten Gitters 39 mit einer größeren Gitterkonstanten L2 gebildet ist. Dabei dient eines der Gitter (z.B. 36) zum Einkoppeln des Anregungslichts und das zweite Gitter 39 zum Auskoppeln des Detektionslichtes. Von besonderem Vorteil ist dabei, daß der Betrag des Gittervektor des Auskopplungsgitters 39 mit dem Betrag des Wellenvektors der gebundenen nichtstrahlenden elektromagnetischen Welle näherungsweise übereinstimmt, so daß das Detektionslicht näherungsweise senkrecht zu der Gitterebene ausgekoppelt wird und demzufolge mit einer entsprechend einem normalen Mikroskop über der Oberfläche 5a der Objektschicht 5 angeordneten Mikroskopoptik erfaßt werden kann. Dies wird nachfolgend anhand der Figuren 7 bis 10 erläutert.

Figur 8 zeigt eine graphische Darstellung der Ein- und Auskopplungsbedingung für eine Doppelgitterstruktur, wie sie in Figur 7 dargestellt ist. Dabei verlaufen zwei Gitter mit unterschiedlichen Gitterkonstanten L1 und L2 unter verschiedenen Winkeln $\theta1$ und $\theta2$ zu der Einfallsebene 29. Ebenfalls dargestellt ist die Differenz $\theta2$ minus $\theta1$.

Resonante Anregung eines Oberflächenplasmons erfolgt, wenn die Bedingungen der Energieerhaltung und der Impulserhaltung erfüllt sind. Hieraus folgt die Bedingung

$$(1) \qquad K_x(Ph) = K(Sp) \pm m \cdot G.$$

Darin ist $\mathbf{K}_x(Ph)$ die Komponente des Photonenimpulses in der Ebene der Metallschicht

$$(2) \qquad K_x(Ph) = |K(Ph)| \sin \phi$$

$\mathbf{K}(Sp)$ ist der Impuls des Oberflächenplasmons und G ist der reziproke Gittervektor

$$(3) \qquad G = 2\pi/L$$

Figur 8 ist eine graphische Darstellung der Einkopplungsbedingung und der Auskopplungsbedingung. Zur Anregung eines Oberflächenplasmons mit dem Betrag $|\mathbf{K}(Sp)|$ ergibt sich für ein Einkopplungsgitter mit dem Azimutwinkel $\theta1$ und dem reziproken Gittervektor

$|\mathbf{G}1|$, daß die Projektion eines die Einkopplungsbedingung erfüllenden Photons den Betrag und die Richtung des in Figur 8 mit $\mathbf{K}_x(Ph)$ in bezeichneten Pfeiles haben muß. Entsprechend resultiert für ein Auskopplungsgitter mit dem Winkel $\theta2$ und dem reziproken Gittervektor G2 die in Figur 8 mit $\mathbf{K}_x(Ph)$ out bezeichnete x-Komponente des Photonenimpulses.

Die Gitterlinien des Einkopplungsgitters und des Auskopplungsgitters können auch parallel zueinander verlaufen. Dies kann sogar vorteilhaft sein, weil sich mit manchen Verfahren parallele Gitterlinien leichter herstellen lassen.

In Figur 9 ist graphisch dargestellt, daß $\mathbf{K}_x(Ph)$ out Null wird, wenn die Bedingung gilt

$$(4) \qquad |G2| = |K(Sp)|$$

d.h. wenn der Betrag des Gittervektors G2 mit dem Betrag des Wellenvektors K(Sp) der gebundenen nichtstrahlenden elektromagnetischen Welle übereinstimmt. Daraus resultiert, daß das Detektionslicht senkrecht von der Oberfläche 5a der Objektschicht 5 ausgekoppelt wird.

Der Wellenvektor des Oberflächenplasmons $\mathbf{K}(Sp)$ hängt bei gegebener Frequenz des Anregungslichtes von der Dispersionsrelation der Oberflächenplasmonen ab. Da diese, wie weiter oben erläutert, wiederum von der Dicke und dem Material der Objektschicht 5 beeinflußt wird, ist der Plasmonenimpuls (geringfügig) abhängig von den Eigenschaften der Objektschicht 5 (dies ist, wie oben erläutert, der Effekt, auf den die Plasmonenmikroskopie beruht). Demzufolge kann die Bedingung (4) nicht für alle Zustände der Objektschicht exakt eingehalten werden. Dies ist jedoch auch nicht erforderlich, weil es genügt, wenn die Bedingung (4) in dem Sinne "im wesentlichen" eingehalten wird, daß das Detektionslicht 26 in die numerische Apertur eines darüber angeordneten optischen Abbildungssystems (Mikroskops) 11 fällt, dessen optische Achse senkrecht zur Oberfläche der Objektschicht 5 verläuft. Diese numerische Anordnung kann gerade bei dieser Orientierung der Mikroskopoptik besonders groß sein.

Figur 10 zeigt eine Anordnung, bei der das Auskopplungsgitter 40 wiederum die Bedingung (4) erfüllt, so daß das Detektionslicht im wesentlichen senkrecht in das optische Abbildungssystem 11 fällt. Die Einkopplung erfolgt in diesem Fall jedoch mit Hilfe eines Prismas 41, auf dessen Basis 42 das Gitter 40 eingeprägt und eine sehr dünne Metallschicht 43 als zweite Schicht 21 aufgebracht ist. Es wurde festgestellt, daß die Lichtdurchlässigkeit einer Metallschicht von weniger als 50 nm Dicke so hoch ist, daß Oberflächenplasmonen durch die Schicht hindurch an der jenseitigen Grenzfläche zu der Objektschicht 5 angeregt werden können.

In Figur 10 sind symbolisch auch die Bindungspartner einer spezifischen Bindungsreaktion dargestellt, nämlich ein erster an der Metallschicht 43 fixierter Bindungspartner 45 und ein zweiter in einer Probenflüssigkeit 46 frei beweglicher Bindungspartner 47.

Bei dieser Ausführungsform befindet sich die Objektschicht 5 in einer Durchflußküvette, deren Wände von der Basis 42 des Prismas 41 und einem darüber angeordneten Abdeckglas 44 gebildet werden. Der Ablauf der Analyse ist dabei so, daß zunächst die Probe für einen ausreichenden Zeitraum mit der Objektschicht 5 in Kontakt gebracht wird, in der sich der fixierte Bindungspartner 45 befindet. Durch die Bindungsreaktion ändert sich die Dicke und/oder Zusammensetzung der Objektschicht 5, wobei diese hinsichtlich der Bindungseigenschaften lateral heterogen ist, so daß auch die Dickenänderung infolge der Bindung von freiem Bindungspartner 47 an den fixierten Bindungspartner 45 lateral heterogen ist (vgl. EP-A-0 469 377).

Nach Ablauf der Bindungsreaktion wird die Durchflußküvette 49 gespült, um einerseits einen Überschuß an freiem Bindungspartner 42 zu entfernen und andererseits die erforderliche optische Transparenz zu gewährleisten.

Selbstverständlich sind zahlreiche Varianten der Erfindung auf Basis der vorstehenden Beschreibung möglich. Insbesondere kann die Schichtstruktur 19 aus mehr als den beschriebenen zwei Schichten bestehen, wobei sich eventuelle weitere Schichten vorzugsweise zwischen der zweiten Schicht 21 und dem Substrat 18 befinden sollten, während die Objektschicht 5 bevorzugt in unmittelbarem Kontakt zu der zweiten Schicht 21 steht.

Die Gitterstruktur ist vorzugsweise in der Oberfläche 18a des Substrats 18 vorgesehen, auf der die zweite Schicht 21 (direkt oder indirekt) angebracht ist. Es ist jedoch grundsätzlich auch möglich, daß eine Gitterstruktur zum Ein- oder Auskoppeln in der zweiten Schicht 21 oder an deren von dem Substrat 18 abgewandten Oberfläche vorgesehen ist. Zahlreiche unterschiedliche Beispiele möglicher multidiffraktiver Gitterstrukturen sind in der EP-A-0 455 067 beschrieben.

**Patentansprüche**

1. Vorrichtung zur lateral aufgelösten Untersuchung einer lateral heterogenen ultradünnen Objektschicht (5), insbesondere zur lateral aufgelösten Detektion einer Änderung der Schichtdicke der Objektschicht (5), die aus einer spezifischen Bindungsreaktion eines an der Objektschicht (5) fixierten ersten Bindungspartners (45) mit einem nichtgebundenen zweiten Bindungspartner (47) resultiert, mit

   einer auf einer planen Oberfläche (18a) eines Substrats (18) parallel zu der planen Oberfläche (18a) verlaufenden mehrschichtigen Schichtstruktur (19), die die Objektschicht (5) als erste Schicht (20) und eine zwischen der Objektschicht (5) und dem Substrat (18) liegende zweite Schicht (21) umfaßt,

   einer Koppleranordnung (25) zum Einkoppeln von Anregungslicht (9), das in einer durch seinen Zentralstrahl und die Normale auf die Objektschicht definierte Einfallsebene (29) einfällt, in die zweite Schicht (21), wobei die Koppleranordnung (25) und die zweite Schicht (29) so ausgebildet sind, daß das Anregungslicht (9) bei mindestens einem definierten Einfallswinkel ($\phi$1) zwischen dem Anregungslichtstrahl (9) und dem Lot auf die Objektschicht (5) in der zweiten Schicht (21) eine gebundene, nichtstrahlende elektromagnetische Welle erzeugt, von der sich eine evaneszente Welle in die Objektschicht (5) erstreckt und

   einem optischen Abbildungssystem (11) zur Abbildung der Objektschicht (5) in eine Bildebene (12) unter einem definierten Ausfallwinkel ($\phi$2) zwischen der optischen Achse des Abbildungssystems (11) und dem Lot auf die Objektschicht, unter welchem Detektionslicht (26) aus der zweiten Schicht (21) ausgekoppelt wird,

   bei welcher die Koppleranordnung (25) eine in der zweiten Schicht (21) verlaufende oder an die zweite Schicht (21) angrenzende, parallel zu der Objektschicht (5) verlaufende optische Gitterstruktur (24) aufweist,

   **dadurch gekennzeichnet, daß**

   das Substrat (18) mit der die optische Gitterstruktur (24) enthaltenden Schichtstruktur (19) um eine senkrecht zur Gitterebene (27) verlaufende Achse (A) drehbar gelagert ist, um zur Einstellung des Abbildungskontrastes die Orientierung der Gitterlinien (28) relativ zur Einfallsebene durch Änderung des Azimutwinkels ($\theta$) zwischen der Einfallsebene (29) und den Gitterlinien (28) zu variieren.

2. Vorrichtung nach Anspruch 1, **dadurch gekennzeichnet, daß** die zweite Schicht eine Metallschicht (22) und die gebundene elektromagnetische Welle ein Oberflächenplasmon ist.

3. Vorrichtung nach Anspruch 1, **dadurch gekennzeichnet, daß** die zweite Schicht eine optische Wellenleiterschicht (35) und die gebundene elektromagnetische Welle eine in der Wellenleiterschicht (35) geführte Wellenleitermode ist.

4. Vorrichtung nach einem der vorhergehenden Ansprüche, **dadurch gekennzeichnet, daß** in der Bildebene (12) ein zweidimensionales Feld (13) lichtempfindlicher Elemente angeordnet ist, das mit einer Bildanalyseeinrichtung (14) in Verbindung steht.

5. Vorrichtung nach einem der vorhergehenden Ansprüche, **dadurch gekennzeichnet, daß** das Anregungslicht (9) polarisiert ist und die Polarisationsebene des Anregungslichts (9) synchron mit der Einstellung des Azimutwinkels (θ) der Gitterlinien (28) drehbar ist.

6. Vorrichtung nach einem der vorhergehenden Ansprüche, **dadurch gekennzeichnet, daß** in dem Lichtweg (26a) zwischen der Objektschicht (5) und der Bildebene (12) ein Polarisator (37) angeordnet ist.

7. Vorrichtung nach einem der vorhergehenden Ansprüche, **dadurch gekennzeichnet, daß** zum Auskoppeln des Detektionslichtes (26) ein Auskopplungsgitter (39,40) vorhanden ist, das in der zweiten Schicht (21) verläuft oder an die zweite Schicht (21) angrenzt und parallel zu der Objektschicht (5) verläuft, und der Betrag des Gittervektors (G2) des Auskopplungsgitters (39,40) mit dem Betrag des Wellenvektors (K(Sp)) der gebundenen nichtstrahlenden elektromagnetischen Welle im wesentlichen übereinstimmt, so daß das Detektionslicht (26) im wesentlichen senkrecht zu der Gitterebene (27) ausgekoppelt wird.

8. Vorrichtung nach Anspruch 7, **dadurch gekennzeichnet, daß** das Auskopplungsgitter Teil einer multidiffraktiven Gitterstruktur (38) mit einer ersten Gitterperiode (L1) zum Einkoppeln des Anregungslichtes (9) und einer zweiten Gitterperiode (L2) zum Auskoppeln des Detektionslichtes (26) unter verschiedenen Winkeln ist.

9. Vorrichtung nach Anspruch 8, **dadurch gekennzeichnet, daß** die multidiffraktive Gitterstruktur (38) eine Doppelgitter-Struktur ist.

10. Vorrichtung nach einem der vorhergehenden Ansprüche, **dadurch gekennzeichnet, daß** die Koppleranordnung (25) zum Einkoppeln des Anregungslichtes (9) ein Prisma (41) einschließt und das Auskopplungsgitter (40) sich parallel zu der Basis des Prismas (41) erstreckt.

## Claims

1. Device for the laterally resolved investigation of a laterally heterogeneous ultrathin object layer (5), especially for the laterally resolved detection of a change in the layer thickness of the object layer (5) which results from a specific binding reaction of a first binding partner (45) bound to the object layer (5) with a free second binding partner (47), having a multilayer structure (19) which extends on a plane surface (18a) of a substrate (18) parallel to the plane surface (18a) and which comprises the object layer (5) as first layer (20) and a second layer (21) located between the object layer (5) and the substrate (18),

light coupler means (25) for coupling excitation light (9), incident in a plane of incidence (29) which is defined by the central ray of the light and by the normal of the object layer, into the second layer (21), wherein the coupler means (25) and the second layer (21) are adapted in such a way that the excitation light (9) generates at at least one defined angle of incidence (φ1) between the excitation light ray (9) and the perpendicular to the object layer (5) a bound, non-radiating electromagnetic wave in the second layer (21), from which an evanescent wave extends into the object layer (5) and

an optical imaging system (11) for the imaging of the object layer (5) in an image plane (12), said optical imaging system being arranged at a defined angle of emergence ((φ2) between the optical axis of the optical imaging system (11) and the perpendicular to the object layer, at which angle detection light (26) is coupled out from the second layer (21), wherein the coupler means (25) comprises an optical grating structure (24) extending in or adjacent to the second layer (21) parallel to the object layer (5),

**characterized in that**

the substrate (18) with the multilayer structure (19) containing the optical grating structure (24) is borne rotatably about an axis (A) extending perpendicular to the grating plane (27), for varying the orientation of the grating lines (28) relative to the plane of incidence by changing the azimuth angle (θ) between the plane of incidence (29) and the grating lines (28) to thereby adjust the image contrast.

2. Device according to claim 1, **characterized in that** the second layer is a metal layer (22) and the bound electromagnetic wave is a surface plasmon.

3. Device according to claim 1, **characterized in that** the second layer is an optical waveguide layer (35) and the bound electromagnetic wave is a waveguide mode guided in the waveguide layer (35).

4. Device according to any one of the preceding claims, **characterized in that** a two-dimensional array (13) of light-sensitive elements is disposed in the image plane (12), which array is coupled to an image analysis device (14).

5. Device according to any one of the preceding claims, **characterized in that** excitation light (9) is polarized and the plane of polarization of the excitation light (9) is rotatable synchronously with the variation of the azimuth angle (θ) of the grating lines (28).

6. Device according to any one of the preceding claims, **characterized in that** a polarizer (37) is disposed in the light path (26a) between the object layer (5) and the image plane (12).

7. Device according to any one of the preceding claims, **characterized in that** a coupling out grating (39, 40) is provided for coupling out of the detection light (26), which extends in or adjacent to the second layer (21) and parallel to the object layer (5), and the magnitude of the grating vector (G2) of the coupling out grating (39, 40) is substantially the same as the magnitude of the wave vector (K(Sp)) of the bound non-radiating electromagnetic wave, whereby the detection light (26) is coupled out substantially perpendicular to the grating plane (27).

8. Device according to claim 7, **characterized in that** the coupling out grating is part of a multidiffractive grating structure (38), in which a first grating period (L1) serves to couple in the excitation light (9) and a second grating period (L2) serves to couple out the detection light (26) at differing angles.

9. Device according to claim 8, **characterized in that** the multidiffractive grating structure (38) is a double grating structure.

10. Device according to any one of the preceding claims, **characterized in that** the light coupler means (25) for coupling in the excitation light (9) includes a prism (41) and the coupling out grating. (40) extends parallel to the base of the prism (41).

**Revendications**

1. Dispositif pour examiner par résolution latérale une couche ultra-mince à hétérogénéité latérale (5), notamment pour la détection par résolution latérale d'une modification de l'épaisseur de couche de la couche (5), qui résulte d'une réaction de liaison spécifique d'un premier partenaire de liaison (45) fixé sur la couche (5) avec un deuxième partenaire de liaison non lié (47), avec
une structure en couche (19) à plusieurs couches sur une surface plane (18a) d'un substrat (18) passant parallèlement à la surface plane (18a), laquelle structure comprend la couche (5) comme première couche (20) et une deuxième couche (21) située entre la couche (5) et le substrat (18),
un dispositif coupleur (25) pour coupler la lumière d'excitation (9), qui fait incidence dans un plan d'incidence (29) défini par son rayon central et la perpendiculaire sur la couche, dans la deuxième couche (21), le dispositif coupleur (25) et la deuxième couche (29) étant conçus de manière telle que la lumière d'excitation (9) produit dans au moins un angle d'incidence défini ($\phi$1) entre le rayon lumineux d'excitation (9) et la soudure sur la couche (5) dans la deuxième couche (21) une onde électromagnétique liée non rayonnante, d'où s'étend une onde évanescente dans la couche (5), et un système de représentation optique (11) pour représenter la couche (5) dans un plan d'image (12) selon un angle d'incidence défini ($\phi$2) entre l'axe optique du système de représentation (11) et la soudure sur la couche, selon lequel la lumière de détection (26) est déclenchée à partir de la deuxième couche (21), dans lequel le dispositif coupleur (25) présente une structure réticulaire optique (24) passant dans la deuxième couche (21) ou passant de façon adjacente à la deuxième couche (21), parallèlement à la couche (5), **caractérisé en ce que** le substrat (18) avec la structure en couche (19) comprenant la structure réticulaire optique (24) est logé de façon à pouvoir pivoter autour d'un axe (A) passant perpendiculairement au plan de grille (27) pour, afin de régler le contraste de représentation, varier l'orientation des lignes réticulaires (28) par rapport au plan d'incidence par modification de l'angle azimutal ($\theta$) entre le plan d'incidence (29) et les lignes réticulaires (28).

2. Dispositif selon la revendication 1, **caractérisé en ce que** la deuxième couche est une couche de métal (22) et l'onde électromagnétique liée est un plasma de surface.

3. Dispositif selon la revendication 1, **caractérisé en ce que** la deuxième couche est une couche en guide d'onde optique (35) et l'onde électromagnétique liée est un mode de guide d'onde guidé dans la couche en guide d'onde (35).

4. Dispositif selon l'une des revendications précédentes, **caractérisé en ce que** dans le plan de l'image (12) est disposé un champ bidimensionnel (13) d'éléments photosensibles, qui est en relation avec un dispositif d'analyse d'images (14).

5. Dispositif selon l'une des revendications précédentes, **caractérisé en ce que** la lumière d'excitation (9) est polarisée et le plan de polarisation de la lumière d'excitation (9) peut tourner de façon synchronisée avec le réglage de l'angle azimutal ($\theta$) des lignes réticulaires (28).

6. Dispositif selon l'une des revendications précédentes, **caractérisé en ce que** dans le trajet lumineux (26a) est disposé un polariseur (37) entre la couche (5) et le plan de l'image (12).

7. Dispositif selon l'une des revendications précédentes, **caractérisé en ce que** pour déclencher la lumière de détection (26), une grille de déclenchement (39, 40) est présente, qui passe dans la deuxième couche (21) ou est adjacente à la deuxième couche (21) et passe parallèlement à la couche (5), et le montant du vecteur de grille (G2) de la grille de déclenchement (39, 40) coïncide essentiellement avec le montant du vecteur d'onde (K(Sp)) de l'onde électromagnétique non rayonnante liée, de sorte que la lumière de détection (26) est déclenchée essentiellement perpendiculairement au plan de grille (27).

8. Dispositif selon la revendication 7, **caractérisé en ce que** la grille de déclenchement est une partie d'une structure de grille à multidiffraction (38) avec une première période de grille (L1) pour coupler la lumière d'excitation (9) et une deuxième période de grille (L2) pour déclencher la lumière de détection (26) selon divers angles.

9. Dispositif selon la revendication 8, **caractérisé en ce que** la structure de grille à multidiffraction (38) est une structure à grille double.

10. Dispositif selon l'une des revendications précédentes, **caractérisé en ce que** le dispositif coupleur (25) pour coupler la lumière d'excitation (9) renferme un prisme (41) et la grille de déclenchement (40) s'étend parallèlement à la base du prisme (41).

EP 0 618 441 B1

Fig. 1

Fig. 3

Fig. 2

Fig. 4

Fig. 5

Fig. 6

**Fig. 10**

**Fig. 7**

**Fig. 8**

$|\vec{G_2}| = |\vec{K_{Sp}}|$

**Fig. 9**